# EUROPÄISCHE PATENTSCHRIFT

(11) **EP 2 986 517 B1**
(45) Veröffentlichungstag und Bekanntmachung des Hinweises auf die Patenterteilung: **10.10.2018**
(21) Anmeldenummer: 14714669.0
(22) Anmeldetag: 28.03.2014
(51) Int. Cl.: B65D 1/02, B29C 49/48

(54) **GETRÄNKEKUNSTSTOFFBEHÄLTNIS UND BLASFORM ZU DESSEN HERSTELLUNG**
PLASTIC DRINKS CONTAINER AND BLOW MOULD FOR THE PRODUCTION THEREOF
RÉCIPIENT DE BOISSON EN MATIÈRE SYNTHÉTIQUE ET MOULE DE SOUFFLAGE POUR SA FABRICATION

(30) Priorität: 15.04.2013 DE 102013103777
(43) Veröffentlichungstag der Anmeldung: 24.02.2016
(73) Patentinhaber: Krones AG, 93073 Neutraubling (DE)
(72) Erfinder: DACHS, Alexander, 93073 Neutraubling (DE); KNAPP, Peter, 93073 Neutraubling (DE); PIETRASCH, Stephanie, 93073 Neutraubling (DE); LAPPE, Ulrich, 93073 Neutraubling (DE)
(74) Vertreter: Bittner, Bernhard
(86) Internationale Anmeldenummer: PCT/EP2014/056276
(87) Internationale Veröffentlichungsnummer: WO 2014/170115

(56) Entgegenhaltungen:
- EP-A1- 0 479 695
- EP-A1- 2 261 126
- WO-A2-2008/017746
- JP-A- 2008 030 836
- US-A1- 2004 060 896
- US-A1- 2005 277 188
- US-S- D 517 918
- US-S- D 592 066
- US-S- D 607 730

## Beschreibung

Die vorliegende Erfindung bezieht sich auf ein Getränkekunststoffbehältnis Derartige Kunststoffbehältnisse sind aus dem Stand der Technik seit langem bekannt. Dabei liegt neuerdings diesen Behältnissen zunehmend mehr die Aufgabe zugrunde, den Materialaufwand zu reduzieren und gleichzeigt jedoch eine Stabilität des Behältnisses aufrechtzuerhalten. Dies bezieht sich beispielsweise auf eine Stabilität gegenüber durch das Abfüllprodukt verursachten Innendrücken, aber auch gegenüber äußeren Belastungen, die beispielsweise durch das Stapeln der Behältnisse auftreten können.

Besonders kritisch ist bei der Auslegung derartiger Behältnisse der Boden dieser Behältnisse, da dieser einerseits auch als Standfläche dient und andererseits auch in besonderer Weise den Drücken durch die Flüssigkeit ausgesetzt ist. Aus dem Stand der Technik sind unterschiedliche Bodendesigns bekannt. Die Erfindung ist insbesondere auf ein Behältnis gerichtet, welches für die Heißabfüllung von Getränken geeignet ist, beispielsweise für die Abfüllung mit Eistees. Derartige heißabfüllgeeignete Behältnisse weisen in der Regel mehrere Füße auf, insbesondere ein Sechs-Fuß-Bodendesign in unterschiedlichen Durchmessern und Bodenhöhen. Die Kunden wünschen jedoch üblicherweise aus Marketinggründen ein niedriges Bodendesign, ähnlich demjenigen eines sogenannten Stillwasserbodens. Bei Heißfüllbehältnissen ist jedoch hier die Umsetzung sehr schwierig bzw. mit Nachteilen, wie beispielsweise einem erhöhten Gewicht der Kunststoffvorformlinge, aus denen die Behältnisse gefertigt werden, verbunden.

US2004/0060896 und WO2008/017746 offenbaren Flaschen mit niedrigen Böden.

Der vorliegenden Erfindung liegt daher die Aufgabe zugrunde, ein Behältnis bzw. insbesondere einen Behältnisboden zu entwickeln, der auch für höhere Belastungen, insbesondere durch Drücke im Innenraum des Behältnisses, eine reduzierte Bodenhöhe erlaubt. Daneben sollte bevorzugt dieses Bodendesign für Abfüllprozesse mit heißem oder warmem Füllgut unter Innendruck geeignet sein.

Ein erfindungsgemäßes Getränkekunststoffbehältnis weist eine Mündung auf, über welche dem Behältnis eine Flüssigkeit entnehmbar (und/oder zuführbar) ist. Weiterhin weist das Behältnis einen sich in einer Längsrichtung an diese Mündung anschließenden Grundkörper auf sowie einen sich in dieser Längsrichtung an diesen Grundkörper anschließenden Bodenabschnitt. Dabei weist der Bodenabschnitt wenigstens drei Standfüße auf, wobei Außenoberflächen dieser Standfüße jeweils einen abschnittsweise ringsegmentförmigen sich über einen vorgegebenen Umfangswinkel erstreckenden Standabschnitt des Kunststoffbehältnisses ausbilden. Weiterhin sind zwischen diesen Standfüßen jeweils wenigstens drei Rillen ausgebildet, wobei sich bevorzugt diese Rillen und die Standfüße in der Umfangsrichtung des Behältnisses abwechseln. Weiterhin erstrecken sich diese Rillen zumindest auch in einer zu der Längsrichtung senkrecht stehenden radialen Richtung des Kunststoffbehältnisses, wobei diese Rillen jeweils einen sich zumindest auch in der radialen Richtung erstreckenden Rillengrund aufweisen sowie einen Wandungsabschnitt, der sich (zumindest auch) von diesem Rillengrund zu dem Standabschnitt eines zu diesem Rillengrund benachbarten Standfußes erstreckt. Die Summe der (d.h. insbesondere aller der) oben erwähnten Umfangswinkel der jeweiligen Standabschnitte ist größer als 180°. Erfindungsgemäß weist wenigstens eine Rille ausgehend von ihrem Rillengrund einen Öffnungswinkel (b) auf, der kleiner ist als 45°, bevorzugt kleiner als 30°, bevorzugt kleiner als 25°, bevorzugt kleiner als 20°.

Bei den aus dem Stand der Technik bekannten Behältnissen sind zwar üblicherweise auch oft Standfüße vorgesehen, diese bilden jedoch eine eher punktuelle Standfläche des Behältnisses aus. Im Rahmen der vorliegenden Erfindung wird nunmehr vorgeschlagen, diesen Umfangswinkel sehr groß zu gestalten, d.h. zumindest derart, dass entlang eines Kreises die eigentliche Standfläche mehr als die Hälfte dieses Kreises einnimmt.

Bevorzugt ergibt sich eine Winkelbreite der Standfläche aus dem Öffnungswinkel des Einschnitts bzw. der Rille und der verwendeten Anzahl an Einschnitten bzw. Rillen. Diese Standfläche ist somit bevorzugt ein unterbrochener Vollkreis. In Summe nehmen die Segmente der Standfläche mehr als 50% des Vollkreises ein.
So wird bevorzugt eine ringsegmentförmige, d.h. insbesondere eine Standfläche in Form eines abschnittsweise unterbrochenen Rings ausgebildet. Diese jeweiligen Unterbrechungen stammen dabei von den erwähnten Rillen. Allerdings sind, wie unten genauer erläutert wird, die Rillen sehr eng gehalten und damit wird im Vergleich zu aus dem Stand der Technik bekannten Behältnissen die Standfläche bzw. der Standabschnitt relativ geringfügig unterbrochen.

Vorteilhaft ist eine Summe dieser Umfangswinkel größer als 200°, bevorzugt größer als 220°, bevorzugt größer als 240°, bevorzugt größer als 270° und bevorzugt größer als 300°. Dies bedeutet, dass weit überwiegend die Füße bezüglich eines Vollkreises eine Standfläche ausbilden.

Vorteilhaft sind dabei die einzelnen Standabschnitte gleich groß und in Umfangsrichtung nacheinander angeordnet. Dabei sind, wie oben erwähnt, diese Standabschnitte jeweils von den Rillen unterbrochen.

Bei einer weiteren vorteilhaften Ausführungsform sind sämtliche Rillen hinsichtlich ihrer geometrischen Struktur im Wesentlichen identisch ausgebildet. Mit anderen Worten ist bevorzugt nur eine Gattung von Rillen vorgesehen. Es wäre jedoch auch denkbar, dass neben den besagten ersten Rillen noch zweite Rillen angeordnet sein können, die sich beispielsweise jeweils mit den oben genannten ersten Rillen abwechseln.

Vorteilhaft handelt es sich, wie oben erwähnt, bei dem Behältnis um ein Hotfill-Behältnis, d.h. ein Behältnis, welches für die Befüllung mit einem erwärmten Medium bestimmt und gedacht ist. Allgemein ist jedoch das hier beschriebene Behältnisdesign bevorzugt für heiß gefüllte Produkte mit einem Innendruck bis zu 4,0 bar, für drucklose heiß und kalt gefüllte Produkte und auch für kalt gefüllte Produkte mit einem Innendruck bis zu 6,0 bar geeignet. Weiterhin handelt es sich bei dem Behältnis vorteilhaft um ein PET - Behältnis mit einer Füllmenge von 100ml bis 5,0l. Zudem wäre es denkbar, dem Behältnis bzw. dem Kopfraum des Behältnisses nach dem Befüllen mit einem heißen Medium und vor dem Verschließen Stickstoff zuzuführen, der den starken Druckabfall im darauffolgenden Kühlprozess bremst, um einen stabilen Druck in dem Behältnis zu gewährleisten.

Bei einer weiteren vorteilhaften Ausführungsform ist ein Querschnitt der Mündung geringer als ein Querschnitt des Grundkörpers. Weiterhin weist bevorzugt der Grundkörper einen kreisförmigen Querschnitt auf. Bei einer weiteren vorteilhaften Ausführungsform weist auch der Bodenabschnitt einen kreisförmigen Querschnitt auf. Bei einer weiteren vorteilhaften Ausführungsform weist der Rillengrund in einer Projektion in einer radialen Richtung des Behältnisses ein gekrümmtes bzw. wenigstens abschnittsweise gekrümmtes Profil auf. Vorteilhaft liegt dabei ein Krümmungsradius dieses Rillenrundes bei mehr als 5 mm, bevorzugt bei mehr als 10 mm, bevorzugt bei mehr als 20 mm. Auch wäre es möglich, dass der besagte Rillengrund zumindest abschnittsweise auch geradlinig verläuft.

Bei einer weiteren vorteilhaften Ausführungsform weist der Rillengrund in einer Umfangsrichtung eine Breite auf, die zwischen 0,1 mm und 10 mm, bevorzugt zwischen 1 mm und 8 mm und besonders bevorzugt zwischen 1 mm und 6 mm liegt. Bevorzugt beträgt die maximale Breite dieses Rillengrundes ein Drittel eines Behältnisaußendurchmessers.

Weiterhin weist dabei der Rillengrund eine konstante Breite auf. Es wäre jedoch auch denkbar, dass sich der Rillengrund nach außen hin erweitert, wobei die Ränder dieses Rillengrunds bevorzugt geradlinig verlaufen.

Bei einer weiteren vorteilhaften Ausführungsform liegt ein Verhältnis zwischen der Breite des Rillengrundes und einem Abstand zweier dieser Rille begrenzenden Standabschnitten zwischen 1:1 und 1:10, bevorzugt zwischen 1:1,1 und 1:8, bevorzugt zwischen 1:1,5 und 1:6.

Auch an diesem Verhältnis wird deutlich, dass die Rillen im Vergleich zu aus dem Stand der Technik bekannten Rillen sehr schmal ausgeführt sind, wodurch die Stabilität des Behältnisses erhöht wird.

Bei einer weiteren vorteilhaften Ausführungsform weist das Behältnis ein Außengewinde auf.

Bei einer weiteren vorteilhaften Ausführungsform erstreckt sich der besagte Rillengrund zumindest abschnittsweise in einer Umfangsrichtung des Behältnisses geradlinig. Im Gegensatz hierzu weisen die aus dem Stand der Technik bekannten Behältnisse üblicherweise gekrümmte Verläufe dieser Rillengründe auf.

Bei einer weiteren vorteilhaften Ausführungsform wird die Basiskontur innen bzw. die Kontur im Bereich des Rillengrundes ausgehend von einem Zentrum des Bodens durch mehrere aufeinanderfolgende Abschnitte mit zumindest teilweise unterschiedlichen Krümmungen beschrieben. So kann beispielsweise der erste Abschnitt ausgehend von dem Mittelpunkt des Bodenabschnitts eine Gerade sein. An diese Gerade kann sich ein erster gekrümmter Abschnitt mit einem vorgegebenen (Krümmungs-)Radius anschließen. Es wäre jedoch auch denkbar, dass sich die Rille bzw. der Rillengrund nicht bis in das Zentrum des Behältnisbodens, also bis zum Anspritzpunkt, erstreckt.

An diesen ersten gekrümmten Abschnitt kann sich ein zweiter gekrümmter Abschnitt mit einem weiteren (Krümmungs-)Radius anschließen und an diesen zweiten gekrümmten Abschnitt kann sich ein dritter gekrümmter Abschnitt mit einem dritten (abschließenden) (Krümmungs-)Radius anschließen. Diese Geometrie kann dabei die Führungskontur für die innere Querschnittskontur bilden und bevorzugt den Verlauf des Einschnitts bzw. der Rille angeben.

Als Varianten können die genannten (konstanten) (Krümmungs-)Radien bzw. gekrümmten Abschnitte, welche sich an den geradlinigen Abschnitt anschließen auch durch einen gemeinsamen Spline n-ten Grades ersetzt werden. Alternativ könnte auch einer der gekrümmten Abschnitte als eine Gerade dargestellt werden. Bei der Variante mit einem Spline geht dieser krümmungsstetig, mindestens tangentenstetig, in eine Gerade, die parallel zu Außendurchmesser ist, über.

Vorteilhaft sind die Übergänge der Radien bzw. der gekrümmten Abschnitte zumindest teilweise und bevorzugt alle tangentenstetig. Die Übergänge der Splines sind bevorzugt krümmungsstetig, mindestens aber tangentenstetig.

Die Funktion dieser Kontur ist es, dass die auf das Bodenzentrum wirkenden Druckkräfte durch diese "Einschnitte" in die Flaschenseitenwand abgeleitet werden. Daher ist es vorteilhaft, dass der Anfangspunkt der Führungskontur in der Mitte des Behältnisses niedriger ist als der Endpunkt der Führungskontur.

Erfindungsgemäß weist wenigstens eine Rille ausgehend von dem Rillengrund einen Öffnungswinkel auf, der kleiner ist als 45°, bevorzugt kleiner als 30°, bevorzugt kleiner als 25° und besonders bevorzugt kleiner als 20°. Im Gegensatz zu aus dem Stand der Technik bekannten Behältnisse werden damit sehr enge Rillen vorgeschlagen. Durch diese engen Rillen kann, wie oben erwähnt, die Standfläche des Behältnisses vergrößert werden und gleichzeitig ein relativ flaches Bodendesign ermöglicht werden. Dabei wird dieser Winkel bevorzugt zwischen dem Rillengrund einerseits und den an die Rille heranreichenden Enden der beiden dieser Rille benachbarten Standabschnitte bzw. Füße gebildet.

Bei einer weiteren vorteilhaften Ausführungsform spannen die ringsegmentförmigen Standabschnitte eine Standebene des Behältnisses auf, welches senkrecht zu der Längsrichtung des Behältnisses steht. Hiermit ist gemeint, dass die Standfläche selbst zwar bevorzugt ringförmig bzw. ringsegmentförmig ist, eine hierdurch aufgespannte Ebene sich jedoch senkrecht zu der Längsachse des Behältnisses erstreckt.

Bei einer weiteren vorteilhaften Ausführungsform erstreckt sich wenigstens ein Wandungsabschnitt wenigstens abschnittsweise gegenüber der Standebene unter einem Winkel, der größer ist als 45°, bevorzugt größer als 60°, bevorzugt größer als 75°. Auch hieran erkennt man, dass das Behältnis in einem stehenden Zustand sehr steil verlaufende Wandungsabschnitte aufweist.

Bei einer weiteren vorteilhaften Ausführungsform weist das Behältnis zwischen drei und zwölf Standfüßen, bevorzugt zwischen vier und acht Standfüßen und besonders bevorzugt zwischen vier und sieben Standfüßen auf.

Mit anderen Worten könnten Einschnittssegmente definiert werden, wobei sich ein Einschnittssegment aus einem durchgängigen Einschnitt bzw. der Rille und einem Teil der Außenfläche des Behältnisses zusammensetzt. Der Boden kann vorteilhaft eine Anzahl von minimal 3 Einschnittsegmenten bis maximal 12 Einschnittsegmenten am Umfang beinhalten. Die Außendimensionen des Bodens werden vorteilhaft durch den Außendurchmesser und die Bodenhöhe festgelegt. Das Maß eines Standkreisdurchmessers kann durch ein Verhältnis zum Außendurchmesser des Behältnisses festgelegt werden. Vorteilhaft liegt ein Verhältnis zwischen einem Außendurchmesser des Kunststoffbehältnisses und einem Standkreisrdurchmesser zwischen 0,5 und 0,99, bevorzugt zwischen 0,5 und 0,9 und besonders bevorzugt zwischen 0,6 und 0,8.

Bei einer weiteren vorteilhaften Ausführungsform erstreckt sich wenigstens ein Wandabschnitt bzw. Wandungsteilabschnitt einer Rille in wenigstens einer vorgegebenen Richtung wenigstens abschnittsweise geradlinig. Insbesondere erstreckt sich dieser Wandabschnitt in einer Richtung geradlinig, die wenigstens auch eine Komponente in der Längsrichtung des Behältnisses aufweist. So kann insbesondere ein solcher Wandungsabschnitt definiert werden, zwischen einem bestimmten Punkt der Rille, der in einem bestimmten radialen Abstand von der Längsrichtung steht hin zu einem bestimmten Punkt des Standfußes, der den gleichen radialen Abstand von der Längsrichtung des Behältnisses aufweist.

Im Stand der Technik sind diese Wandabschnitte üblicherweise gekrümmt ausgeführt. Durch die geradlinige Ausführung ist es jedoch möglich, die Stabilität des Bodens zu erhöhen. Unter einem im Wesentlichen geradlinigen Verlauf wird dabei verstanden, dass der Krümmungsradius dieses Wandungsabschnitts größer ist als 4 cm, bevorzugt größer als 8 cm, bevorzugt größer als 10 cm und bevorzugt größer als 20 cm.

Bei einer weiteren vorteilhaften Ausführungsform erstreckt sich dieser Wandabschnitt in zwei vorgegebenen zueinander senkrechten Richtungen wenigstens abschnittsweise geradlinig. Damit bildet vorteilhaft dieser Wandabschnitt eine ebene Fläche aus.

Vorteilhaft weist der Bodenabschnitt wenigstens abschnittsweise eine sich in Richtung eines Zentrums des Bodenabschnitts erstreckende erste domartige Struktur auf. Diese domartige Struktur ist dabei auf ein Innenvolumen des Behältnisses hin gerichtet. Dies bedeutet, dass bei einem aufrecht stehenden Behältnis ein Zentrum des Bodenabschnitts von einer Standfläche beabstandet ist. Daneben wäre es jedoch auch möglich, dass das Behältnis eine zweite domartige Struktur aufweist, in der ein Anspritzpunkt des Behältnisses liegt.

Bei einer weiteren vorteilhaften Ausführungsform ist das Zentrum des Bodenabschnitts in der Längsrichtung des Kunststoffbehältnisses niedriger angeordnet als ein vorgegebener weiterer Bereich des Bodenabschnitts und insbesondere als ein Bereich, in dem dieser Bodenabschnitt in den Grundkörper übergeht.

Durch diese Anordnung kann das Behältnis mit wenig Material höhere Innendrücke aushalten. Dadurch werden die Druckkräfte in Zugkräfte gewandelt. So können wiederum leichtere Behältnisse mit entsprechend weniger Material zur Verfügung gestellt werden. Der Begriff "niedriger" wird dabei wiederum unter Bezugnahme auf ein aufrecht stehendes Behältnis verstanden.

Bei einer weiteren vorteilhaften Ausführungsform weist der Bodenabschnitt in seinem Zentrum einen Anspritzpunkt auf und wenigstens ein Rillengrund reicht bis an diesen Anspritzpunkt heran oder ist weniger als 5 mm von diesem Anspritzpunkt beabstandet. Mit anderen Worten werden hier die Rillen bevorzugt sehr nahe an den Anspritzpunkt bzw. einen den Anspritzpunkt umgebenden Bereich herangeführt.

Bei einer weiteren vorteilhaften Ausführungsform erstreckt sich wenigstens eine Rille auch in einem Umfangsabschnitt des Bodenabschnitts. Unter einem Umfangsabschnitt ist dabei insbesondere derjenige Bereich zu verstehen, der, wenn das Behältnis auf eine Standfläche gestellt wird, von der Seite her sichtbar ist, bzw. allgemein derjenige Abschnitt, der in einer senkrecht zur Längsrichtung stehenden radialen Richtung sichtbar ist.

Die vorliegende Erfindung ist weiterhin auf eine Blasform zur Erzeugung eines Kunststoffbehältnisses gerichtet, wobei die Blasform einen Hohlraum ausbildet, innerhalb dessen ein Kunststoffvorformling durch Beaufschlagung mit einem fließfähigen Medium gegen eine Innenwandung der Blasform expandierbar ist. Erfindungsgemäß weist die Blasform ein Bodenelement auf, welches geeignet ist, einen Bodenabschnitt der oben bezeichneten Art zu erzeugen.

Weitere Vorteile und Ausführungsformen ergeben sich aus den beigefügten Zeichnungen. Darin zeigen:
- Fig. 1: Eine Darstellung eines erfindungsgemäßen Behältnisses;
- Fig. 2: eine Detailansicht des Bodenabschnitts des in Fig. 1 gezeigten Behältnisses;
- Fig. 3: eine Darstellung einer Rille des Bodenabschnitts;
- Fig. 3a: eine Darstellung einer Wand des Behältnisses im Bereich einer Rille;
- Fig. 3b: eine weitere Detaildarstellung einer Rille;
- Fig. 4: eine Draufsicht von unten auf den Bodenabschnitt;
- Fig. 5: eine Darstellung zur Veranschaulichung der Standflächen;
- Fig. 6: eine weitere perspektivische Darstellung eines Behältnisses;
- Fig. 7: eine Gegenüberstellung eines Rillengrundes und eines Standfußes;
- Fig. 8: eine Darstellung einer Außenoberfläche des Behältnisses im Bereich eines Standfußes;
- Fig. 9: eine Querschnittdarstellung einer Rille; und
- Fig. 10: eine Darstellung des Bodenabschnitts.

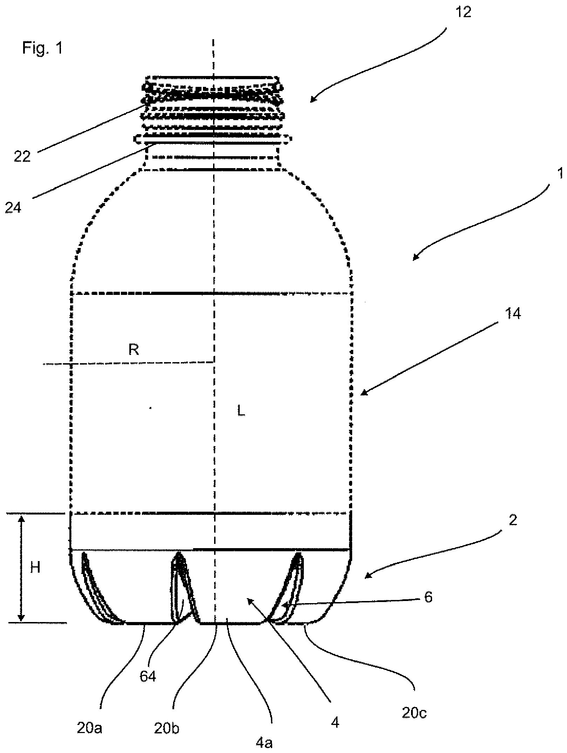

Fig. 1 zeigt eine Seitenansicht eines erfindungsgemäßen Behältnisses 1. Dieses Behältnis weist einen Mündungsabschnitt 12 auf, an den sich in einer Längsrichtung L des Behältnisses 1 ein Grundkörper 14 anschließt. Dieser Grundkörper 14 bildet dabei das wesentliche Aufnahmevolumen zur Aufnahme einer Flüssigkeit aus. An diesen Grundkörper 14 wiederum schließt sich ein Bodenabschnitt 2 an. Das Bezugszeichen R kennzeichnet eine radiale Richtung des Behältnisses. Das Behältnis 1 weist hier, wie oben erwähnt, bevorzugt ein Gewinde 22 sowie einen unterhalb dieses Gewindes liegenden Tragring 24 auf.

Der Bodenabschnitt 2 weist hier mehrere Rillen 6 auf. Man erkennt bereits an Fig. 1, dass diese Rillen wesentlich tiefer eingeschnitten sind, als aus dem Stand der Technik bekannte Rillen. Diese Rillen 6 weisen dabei jeweils einen Wandabschnitt 64 auf, der sich von einem (nicht gezeigten) Rillengrund hin zu den Standfüßen 4 erstreckt. Das Bezugszeichen 4a bezieht sich auf eine Außenwandung dieser Standfüße 4, die gleichzeitig Standabschnitte 20a, 20b und 20c ausbilden. Die weiteren Standabschnitte sind in Fig. 1 nicht erkennbar.

Das Bezugszeichen H kennzeichnet eine Höhe des Bodens, die hier variabel ausgestaltet ist. Man erkennt jedoch, dass die Bodenhöhe H im Vergleich zu aus dem Stand der Technik bekannten Bodenhöhen (insbesondere von heiß befüllbaren Behältnissen) relativ gering ist.

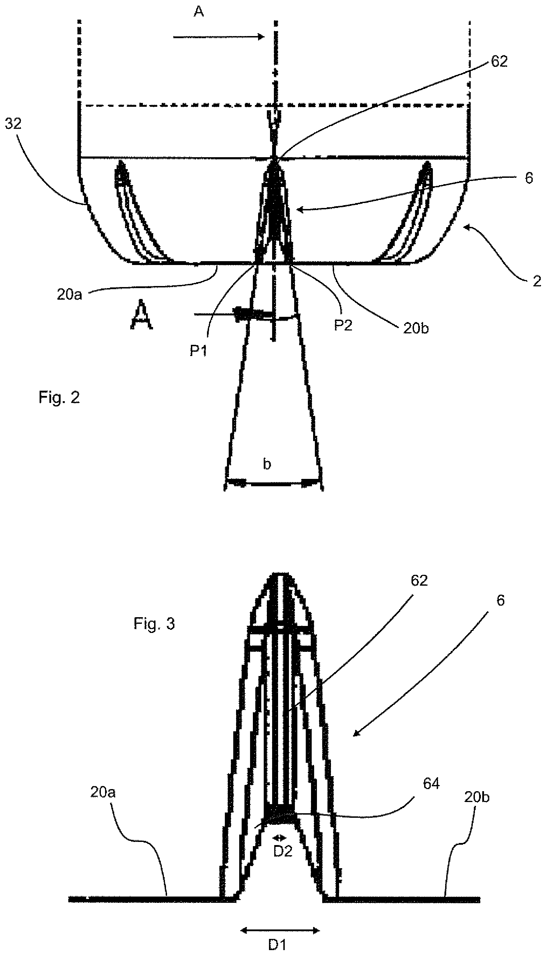

Fig. 2 zeigt eine Detaildarstellung eines Bodenabschnitts 2. Man erkennt hier insbesondere die Rille 6 sowie den Rillengrund 62. Die Rille 6 ist dabei bezüglich dieses Rillengrunds 62 symmetrisch ausgebildet. Das Bezugszeichen b kennzeichnet einen Öffnungswinkel der Rille 6, der, wie oben erwähnt, zwischen dem Rillengrund definiert wird und den Enden der Standabschnitte 20a und 20b, die an die Rille 6 heranreichen. Diese beiden den Winkel gegenüber dem Rillengrund definierenden Punkte sind dabei mit den Bezugszeichen P1 und P2 versehen. Dabei ist es denkbar, dass an den Punkten P1 und P2 keine scharfen Kanten oder Ecken auftreten, sondern diese gekrümmt und/oder abgetrimmt ausgeführt sind.

Das Bezugszeichen 32 kennzeichnet einen Umfangsbereich des Bodenabschnitts 2, wobei man erkennt, dass sich die Rillen 6 auch in diesen Umfangsbereich 32 erstrecken.

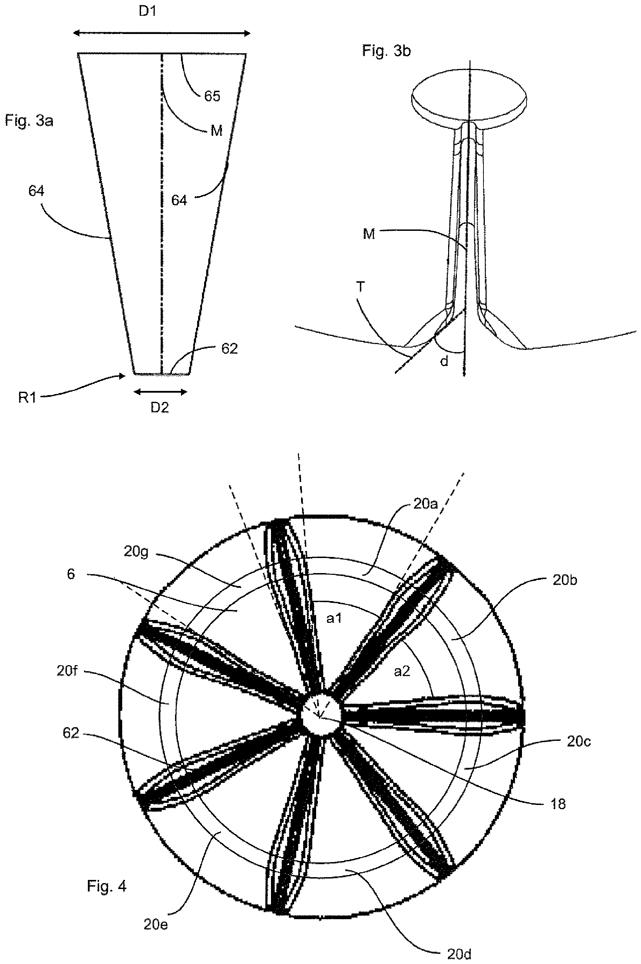

Fig. 3 zeigt eine Detaildarstellung einer Rille 6. Man erkennt hier wiederum den Rillengrund 62 und den sich an den Rillengrund anschließenden Wandabschnitt 64. Dieser Wandabschnitt 64 bildet hier, wie oben erwähnt, eine ebene Fläche aus. Weiterhin ist mit dem Bezugszeichen D1 ein Abstand zwischen den beiden Standabschnitten 20a und 20b dargestellt und mit dem Bezugszeichen D2 eine Breite des Rillengrundes 62. Ein Verhältnis zwischen diesen beiden Längen ist bevorzugt kleiner als 10:1, bevorzugt kleiner als 8:1 und besonders bevorzugt kleiner als 5:1.

Fig. 3a zeigt eine Querschnittsdarstellung des Behältnisses in dem Bereich einer Rille und in radialer Richtung des Behältnisses betrachtet. Die Querschnittskontur des Einschnitts bzw. der Rille wird beschrieben durch zwei parallele Geraden, nämlich einerseits den Rillengrund 62 und andererseits den geometrischen Abstand 65 zwischen zwei Standabschnitten einerseits und zwei zur Mittellinie M symmetrischen Geraden, welche durch die Wandabschnitte 64 gebildet werden.

Die durch die Wandabschnitte 64 gebildeten Geraden können als Varianten der Querschnittskontur auch durch zwei symmetrische Radien oder Splines ersetzt werden. In diesem Fall erstrecken sich die Wandabschnitte nicht geradlinig sondern gekrümmt. Die Geraden bzw. die Wandabschnitte 64 werden über ein Verhältnis gesteuert dass sich aus der Länge des Rillengrundes 62 und dem Abstand 65 ergibt. Wie oben erwähnt ist der Abstand 65 (D2) wenigstens gleich, bevorzugt jedoch größer als die in Fig. 3a gezeigte Länge D2 des Rillengrunds.

Bevorzugt ist auch die Länge des Abschnitts 64 größer als die Länge D2. Bevorzugt ist das Verhältnis Länge der Geraden bzw. des Abschnitts zwischen dem 8 -fachen und dem 12-fachen, bevorzugt zwischen dem 9-fachen und dem 11-fachen und besonders bevorzugt ca. das 10-fache des Abstandes D2.

Fig. 3b zeigt eine weitere Detaildarstellung einer Rille 6. Man erkennt hier, dass die Rille in den in der Fig. 2 gezeigten Punkten P1, P2 abgeflacht bzw. getrimmt ist. Das Bezugszeichen T kennzeichnet dabei eine Tangente, die an diesen abgeflachten bzw. getrimmten Bereich angelegt ist. Ein Winkel d zwischen dieser Tangente T und der Mittellinie M liegt dabei zwischen 0° und 89°, bevorzugt zwischen 10° und 80°, bevorzugt zwischen 20° und 70° und besonders bevorzugt zwischen 30° und 60°. Daneben erkennt man, dass der Bereich in diesen Punkten P1 und P2 wiederum gekrümmt ausgeführt sein kann.

Fig. 4 zeigt eine Ansicht von unten auf den Bodenabschnitt 2. In dem Zentrum des Bodenabschnitts ist hier ein Anspritzpunkt 18 vorhanden.

Weiterhin sind hier die einzelnen Standabschnitte 20a, 20b, 20c, 20d, 20e, 20f und 20g dargestellt. Diese schließen in Umfangsrichtung jeweils Winkel a1, a2..., ein. Die einzelnen Umfangswinkel sind dabei jeweils gleich groß. Zwischen diesen Standabschnitten liegen die Rillen, die damit keine Standflächen ausbilden.

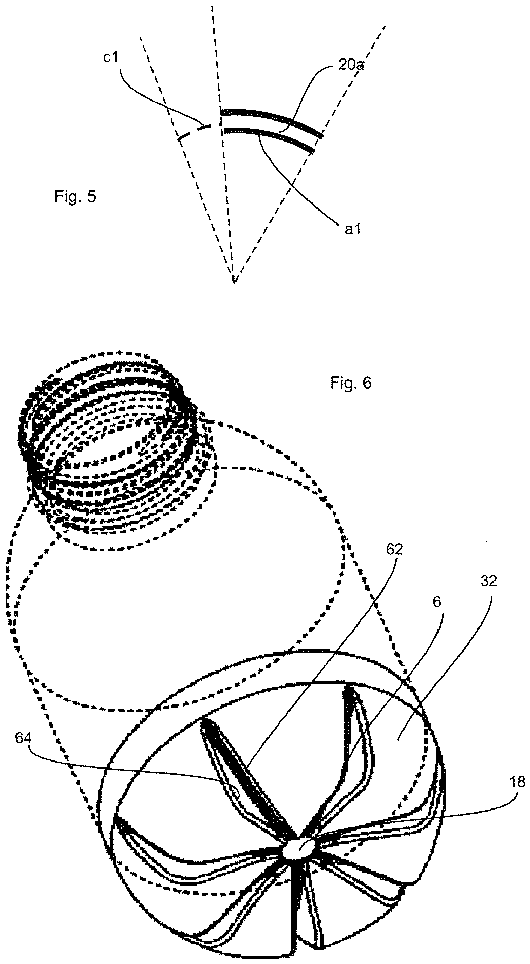

Fig. 5 zeigt eine Veranschaulichung der Standflächen. Dabei bildet wiederum der Standabschnitt 20a eine Standfläche aus, welcher einen Umfangswinkel a1 aufweist. Der Umfangswinkel c1 bezieht sich auf den durch die Rille gebildeten Winkel, d.h. in diesem Abschnitt ist keine Standfläche des Behältnisses ausgebildet. Diese Winkel stehen hier in einem Verhältnis, welches zwischen 1:1 und 10:1, bevorzugt zwischen 1,5:1 und 1:8 und besonders bevorzugt zwischen 1:2 und 1:6 liegt. Dieses Verhältnis ist wiederum auch maßgeblich für den Anteil der Standabschnitte an einem Vollkreis, da, wie oben erwähnt, die einzelnen Standfüße bevorzugt gleichartig ausgebildet sind und auch die zwischen den Standfüßen ausgebildeten Rillen.

Fig. 6 zeigt eine perspektivische Darstellung eines erfindungsgemäßen Behältnisses. Auch hier sind wieder die sieben Standfüße zu erkennen und auch die zwischen diesen angeordneten Rillen 6. Auch erkennt man, dass die einzelnen Rillen bis auf den Anspritzpunkt 18 bzw. dessen Bereich zulaufen.

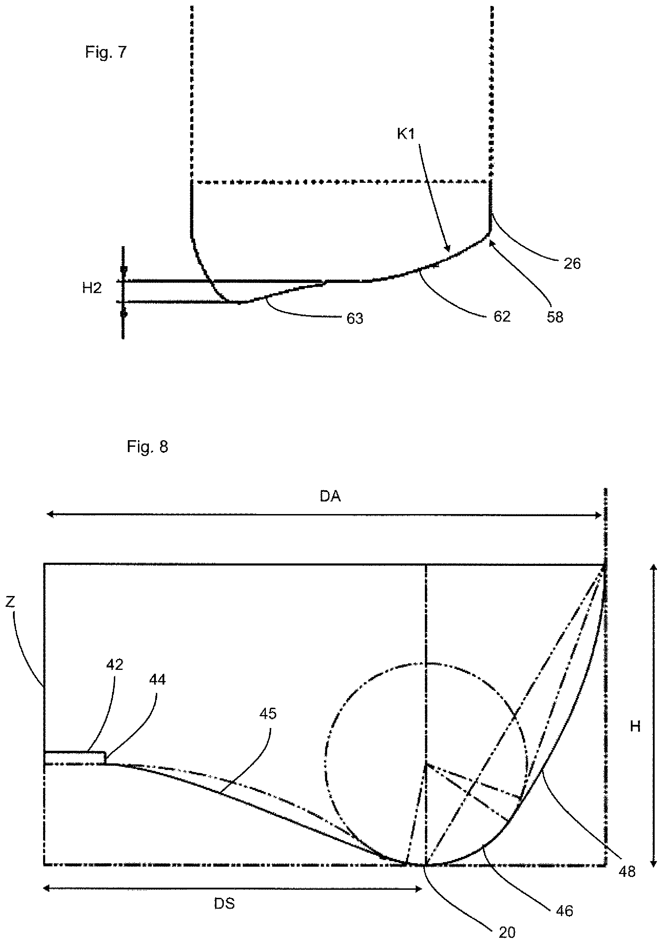

Fig. 7 zeigt eine Ansicht entlang der Linie AA aus Fig. 2. Dabei ist auf der rechten Seite der in dem Nutgrund 62 dargestellten auf der linken Seite der Verlauf im Bereich eines Standfußes, der hin zu einem Standabschnitt führt. Das Bezugszeichen H2 kennzeichnet einen Höhenunterschied zwischen dieser Standfläche 63 und einem Höhenniveau des Anspritzpunktes. Diese Höhe, die gleichzeitig auch ein Maß für die Bodenfreiheit ist, kann dabei variabel gewählt werden und liegt zwischen 1mm und 20mm, bevorzugt zwischen 2mm und 18mm, bevorzugt zwischen 3mm und 15mm und bevorzugt zwischen 4mm und 10mm.

Man erkennt weiterhin, dass der Rillengrund 62 nur sehr schwach gekrümmt ist und mit anderen Worten sehr hohe Krümmungsradien aufweist. In einem Übergang zwischen dem Rillengrund 62 und einer Umfangswandung liegen jedoch relativ geringe Krümmungsradien (R1 / Fig. 3a) vor, die bevorzugt zwischen Radius 0,001mm und Radius 15mm liegen, bevorzugt zwischen Radius 0,1mm und Radius 10mm, bevorzugt zwischen Radius 0,2mm und Radius 5mm. Dabei wäre es möglich, dass es sich um einen konstanten Krümmungsradius handelt. Es wäre jedoch auch denkbar, dass sich dieser Krümmungsradius ändert. So könnte sich der Krümmungsradius von radial innen nach radial außen verkleinern oder vergrößern. Auch wäre es denkbar, dass sich der Krümmungsradius zunächst vergrößert und anschließend wieder verkleinert oder umgekehrt zunächst verkleinert und anschließend wieder vergrößert. Beispielsweise könnte sich der Krümmungsradius zwischen 0,1mm und 10mm ändern, wobei bevorzugt eine derartige Änderung kontinuierlich erfolgt. Das Bezugszeichen K1 bezieht sich auf einen Krümmungsradius des Rillengrundes 62.

Fig. 8 zeigt eine Außenoberfläche des Behältnisses 1 bzw. die Basiskontur außen. Diese wird hier, betrachtet ausgehend von einem Zentrum des Bodenabschnitts, beschrieben durch eine im Wesentlichen horizontale Gerade 42 (erster Abschnitt), wobei unter im Wesentlichen horizontal verstanden wird, dass ein Neigungswinkel dieser Geraden gegenüber einer genau horizontalen Richtung dem Betrag nach um nicht mehr als 10°, bevorzugt um nicht mehr als 7°, bevorzugt um nicht mehr als 5°, besonders bevorzugt um nicht mehr als 3° und besonders bevorzugt um nicht mehr als 1° abweicht. Neben einer Geraden kämen hier auch geringe Krümmungen in Betracht, beispielsweise Krümmungen mit einem Krümmungsradius von mehr als 10cm, bevorzugt von mehr als 20cm.

An diese horizontale Gerade 42 bzw. den ersten horizontalen Abschnitt 42 schließt sich ein zweiter Abschnitt 44 an. Ein Winkel dieses zweiten Abschnitts 44 liegt zwischen 0° - 45° bezogen auf die Rotationsachse Z (10, Abb.1). An diesen zweiten Abschnitt 44 schließt sich ein gekrümmter Abschnitt bzw. ein Spline 45 an. Ein Krümmungsradius-Verlauf dieses gekrümmten Abschnitts kann durch ein Polynom n-ten Grades (wobei n bevorzugt zwischen 3 und 8 liegt) beschrieben werden. Dieser gekrümmte Abschnitt 45 bildet auch die domartige Struktur des Behältnisbodens 2 aus. Das Bezugszeichen DA kennzeichnet einen Außendurchmesser des Behältnisses 1 bzw. dessen Bodenabschnitts und das Bezugszeichen DS kennzeichnet einen Stand"kreis" - Durchmesser, d.h. den Durchmesser bzw. Radius, der von einer auf einen Vollkreis erweiterten Standfläche eingenommen würde.
An diesen gekrümmten Abschnitt 45 schließt sich der Standabschnitt 20 an. Dieser Standabschnitt 20 erstreckt sich auch hier in der radialen Richtung des Bodens bevorzugt horizontal, so dass sich eine ringförmige Standfläche ergibt. An diesen Standabschnitt 20 wiederum schließt sich ein gekrümmter Abschnitt bzw. Spline 46 an und an diesen ein weiterer gekrümmter Abschnitt 48. Aus dieser Kontur wird die sogenannte Außenfläche der Bodengeometrie durch eine Rotation um die Rotationsachse Z erzeugt. Diese Rotationsachse bestimmt auch die Längsrichtung des Behältnisses.

Die Übergänge der Radien bzw. der geraden Abschnitte sind bevorzugt wenigstens teilweise und besonders bevorzugt alle tangentenstetig. Die Übergänge der gekrümmten Abschnitte 45, 46, 48 Splines sind bevorzugt krümmungsstetig, besonders bevorzugt mindestens aber tangentenstetig.

Die gekrümmten Abschnitte 45, 46, 48 können als Varianten der Außengeometrie wenigstens teilweise auch durch die Geometrie einer Geraden oder eines (konstanten) Radius ersetzt werden. Der Krümmungsverlauf des Splines 45, 46, 48 kann, wie oben erwähnt, durch ein Polynom n-ten Grades beschrieben werden.

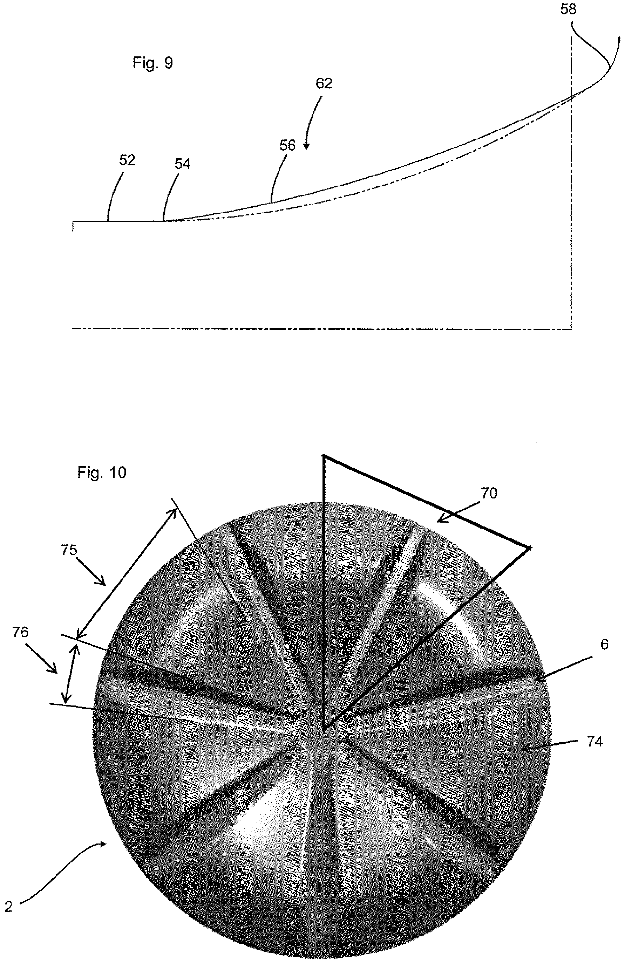

Fig. 9 zeigt eine Darstellung des Krümmungsverlaufes in einem Bereich eines Rillengrundes bzw. der Basiskontur innen. Hier ist, betrachtet ausgehend von dem Zentrum des Bodens (links in der Figur), zunächst ein geradlinig verlaufender Abschnitt 52 vorgesehen, der bevorzugt ebenfalls in einer im Wesentlichen horizontalen Richtung verläuft, wobei unter im Wesentlichen horizontal verstanden wird, dass ein Neigungswinkel dieser Geraden gegenüber einer genau horizontalen Richtung dem Betrag nach um nicht mehr als 10°, bevorzugt um nicht mehr als 7°, bevorzugt um nicht mehr als 5°, besonders bevorzugt um nicht mehr als 3° und besonders bevorzugt um nicht mehr als 1° abweicht.

An diesen geradlinig verlaufenden Abschnitt schließen sich ein erster gekrümmter Abschnitt 54 und ein zweiter gekrümmter Abschnitt 56 an. Diese beiden gekrümmten Abschnitte 54 und 56 bilden gemeinsam den Rillengrund 62 aus. An den gekrümmten Abschnitt 56 schließt sich ein weiterer gekrümmter Abschnitt 58 an.

Fig. 10 zeigt eine weitere perspektivische Darstellung des Behältnisbodens 2 zur Veranschaulichung der Geometrien. Dargestellt ist hier das gesamte Einschnitts- bzw. Rillensegment 70, welches sich aus einer durchgängigen Rille 6 bzw. dem durchgängigen Einschnitt 6 und einem Teil der Außenfläche 74 zusammensetzt. Das Bezugszeichen 75 kennzeichnet hier die Winkelbreite der Standfläche und das Bezugszeichen 76 den Öffnungswinkel der Rille 6.

### Bezugszeichenliste

- 1: Behältnis
- 2: Bodenabschnitt
- 4: Standfüße
- 4a: Außenwandung
- 6: Rillen
- 12: Mündungsabschnitt
- 14: Grundkörper
- 18: Anspritzpunkt
- 20, 20a-20g: Standabschnitte
- 22: Gewinde
- 24: Tragring
- 26: Zylindrischer Abschnitt im Boden
- 32: Umfangsbereich
- 42: erster Abschnitt
- 44: zweiter Abschnitt
- 45, 46, 48: gekrümmte Abschnitte
- 52: geradlinig verlaufender Abschnitt
- 54, 56, 58: gekrümmt verlaufende Abschnitte
- 62: Rillengrund
- 63: Standfläche
- 64: Wandabschnitt
- 65: Abstand zwischen zwei Standabschnitten
- 70: Rillensegment
- 74: Teil der Außenfläche
- 75: Winkelbreite der Standfläche
- 76: Öffnungswinkel der Rille 6

- L: Längsrichtung
- R: radiale Richtung
- H: Höhe des Bodens
- H2: Höhenunterschied
- b: Öffnungswinkel
- P1, P2: den Winkel definierende Punkte
- D1: Abstand zwischen den Standabschnitten
- D2: Breite des Rillengrundes
- a1-a7: Winkel
- d: Winkel
- c1: durch die Rille gebildeter Winkel
- AA: Linie
- Z: Rotationsachse
- K1: Krümmungsradius
- DA: Außendurchmesser
- DS: Standkreisdurchmesser
- R1: Krümmungsradius
- M: Mittellinie
- T: Tangente

## Patentansprüche

1. Getränkekunststoffbehältnis mit einer Mündung (12), über welche dem Behältnis eine Flüssigkeit entnehmbar ist, mit einem sich in einer Längsrichtung (L) an diese Mündung (12) anschließenden Grundkörper (14) und einem sich in dieser Längsrichtung (L) an diesen Grundkörper (14) anschließenden Bodenabschnitt (2), wobei der Bodenabschnitt (2) wenigstens drei Standfüße (4) aufweist, wobei Außenoberflächen (4a) dieser Standfüße (4) jeweils einen abschnittsweise ringsegmentförmigen sich über einen vorgegebenen Umfangswinkel (a1, a2, a3..) erstreckenden Standabschnitt (20a, 20b, 20c) des Getränkekunststoffbehältnisses (1) ausbilden und wobei zwischen diesen Standfüßen wenigstens drei Rillen (6) ausgebildet sind, wobei diese Rillen (6) sich zumindest auch in einer zu der Längsrichtung (L) senkrecht stehenden radialen Richtung (R) des Getränkekunststoffbehältnisses erstrecken, wobei diese Rillen (6) jeweils einen sich zumindest auch in der radialen Richtung erstreckenden Rillengrund (62) aufweisen sowie einen Wandabschnitt (64), der sich von diesem Rillengrund (62) zumindest auch zu einem Standabschnitt (20a, 20b, 20c) eines zu diesem Rillengrund (62) benachbarten Standfußes erstreckt wobei eine Summe dieser Umfangswinkel (a1, a2, a3..) größer ist als 180°, **dadurch gekennzeichnet, dass** wenigstens eine Rille (6) ausgehend von ihrem Rillengrund (62) einen Öffnungswinkel (b) aufweist, der kleiner ist als 45°, bevorzugt kleiner als 30°, bevorzugt kleiner als 25°, bevorzugt kleiner als 20°.

2. Getränkekunststoffbehältnis (1) nach Anspruch 1,
**dadurch gekennzeichnet, dass**
die ringsegmentförmigen Standabschnitte (20a, 20b, 20c) eine Standebene des Behältnisses aufspannen, welche senkrecht zu der Längsrichtung (L) des Behältnisses steht.

3. Getränkekunststoffbehältnis (1) nach Anspruch 2,
**dadurch gekennzeichnet, dass**
sich wenigstens ein Wandungsteilabschnitt (64) wenigstens abschnittsweise gegenüber der Standebene unter einem Winkel erstreckt, der größer ist als 45°, bevorzugt größer als 60°, bevorzugt größer als 75°.

4. Getränkekunststoffbehältnis (1) nach wenigstens einem der vorangegangenen Ansprüche,
**dadurch gekennzeichnet, dass**
das Behältnis zwischen 3 und 12 Standfüßen, bevorzugt zwischen 4 und 8 Standfüßen und besonders bevorzugt zwischen 4 und 7 Standfüßen aufweist.

5. Getränkekunststoffbehältnis (1) nach wenigstens einem der vorangegangenen Ansprüche,
**dadurch gekennzeichnet, dass**
ein Verhältnis zwischen einem Außendurchmesser des Kunststoffbehältnisses (1) und einem Standkreisdurchmesser zwischen 0,5 und 0,99, bevorzugt zwischen 0,5 und 0,9 und besonders bevorzugt zwischen 0,6 und 0,8 liegt.

6. Getränkekunststoffbehältnis (1) nach wenigstens einem der vorangegangenen Ansprüche,
**dadurch gekennzeichnet, dass**
sich wenigstens ein Wandabschnitt (64) in wenigstens einer vorgegebenen Richtung wenigstens abschnittsweise geradlinig erstreckt.

7. Getränkekunststoffbehältnis (1) nach Anspruch 6,
**dadurch gekennzeichnet, dass**
sich dieser Wandabschnitt (64) in zwei vorgegebenen zueinander senkrechten Richtungen wenigstens abschnittsweise geradlinig erstreckt.

8. Getränkekunststoffbehältnis (1) nach wenigstens einem der vorangegangenen Ansprüche,
**dadurch gekennzeichnet, dass**
der Bodenabschnitt wenigstens abschnittsweise eine sich in Richtung eines Zentrum des Bodenabschnitts (2) erstreckende erste domartige Struktur aufweist.

9. Getränkekunststoffbehältnis (1) nach Anspruch 1,
**dadurch gekennzeichnet, dass**
das Zentrum (18) des Bodenabschnitts (2) in der Längsrichtung des Kunststoffbehältnisses niedriger angeordnet ist als ein weiterer Abschnitt (58) des Bodenabschnitts.

10. Getränkekunststoffbehältnis (1) nach wenigstens einem der vorangegangenen Ansprüche,
**dadurch gekennzeichnet, dass**
der Bodenabschnitt (1) in seinem Zentrum einen Anspritzpunkt (18) aufweist und wenigstens ein Rillengrund bis an diesen Anspritzpunkt (18) heranreicht oder weniger als 5mm von diesem Anspritzpunkt beabstandet ist.

11. Getränkekunststoffbehältnis (1) nach wenigstens einem der vorangegangenen Ansprüche,
**dadurch gekennzeichnet, dass**
wenigstens eine Rille sich auch in einen Umfangsabschnitt (32) des Bodenabschnitts erstreckt.

12. Blasform, welche dazu eingerichtet und dafür vorgesehen ist ein Getränkekunststoffbehältnis gemäß zumindest einem der vorhergehenden Ansprüche herzustellen, wobei die Blasform einen Hohlraum ausbildet, innerhalb dessen ein Kunststoffvorformling durch Beaufschlagung mit einem fließfähigen Medium gegen eine Innenwandung der Blasform expandierbar ist,
**dadurch gekennzeichnet, dass**
die Blasform ein Bodenelement aufweist, welches geeignet ist, einen Bodenabschnitt (2) des Behältnisses zu erzeugen, wobei der Bodenabschnitt (2) wenigstens drei Standfüße (4) aufweist, wobei Außenoberflächen (4a) dieser Standfüße (4) jeweils einen abschnittsweise ringsegmentförmigen sich über einen vorgegebenen Umfangswinkel (a1, a2, a3..) erstreckenden Standabschnitt (20a, 20b, 20c) des Getränkekunststoffbehältnisses (1) ausbilden und wobei zwischen diesen Standfüßen wenigstens drei Rillen (6) ausgebildet sind, wobei diese Rillen (6) sich zumindest auch in einer zu der Längsrichtung (L) senkrecht stehenden radialen Richtung (R) des Getränkekunststoffbehältnisses erstrecken, wobei diese Rillen (6) jeweils einen sich zumindest auch in der radialen Richtung erstreckenden Rillengrund (62) aufweisen sowie einen Wandabschnitt (64), der sich von diesem Rillengrund (62) zumindest auch zu einem Standabschnitt (20a, 20b, 20c) eines zu diesem Rillengrund (62) benachbarten Standfußes erstreckt und wobei eine Summe dieser Umfangswinkel (a1, a2, a3..) größer ist als 180°.

## Claims

1. A plastics material container (1) with an aperture (12) by way of which a liquid is capable of being removed from the container, with a main body (14) adjoining this aperture (12) in a longitudinal direction (L) and a base portion (2) adjoining this main body (14) in this longitudinal direction (L), wherein the base portion (2) has at least three stand feet (4), wherein external surfaces (4a) of these stand feet (4) in each case form a stand portion (20a, 20b, 20c) of the plastics material container (1) extending in sections in the form of an annular segment over a pre-set circumferential angle (a1, a2, a3 ..) and wherein at least three grooves (6) are formed between these stand feet, wherein these grooves (6) extend at least also in a radial direction (R) of the plastics material container which is at a right angle to the longitudinal direction (L), wherein these grooves (6) have in each case a groove bottom (62) which extends at least also in the radial direction as well as a wall portion (64) which extends at least also from this groove bottom (62) to a stand portion (20a, 20b, 20c) of a stand foot adjacent to this groove bottom (62),
wherein a sum of these circumferential angles (a1, a2, a3 ..) is greater than 180°,
**characterized in that**
at least one groove (6) starting from the groove bottom (62) thereof has an opening angle (b) which is less than 45°, preferably less than 30°, preferably less than 25°, preferably less than 20°.

2. A plastics material container (1) according to claim 1,
**characterized in that**
the stand portions (20a, 20b, 20c) in the form of an annular segment span a stand plane of the container which is at a right angle to the longitudinal direction (L) of the container.

3. A plastics material container (1) according to claim 2,
**characterized in that**
at least one partial wall portion (64) extends at least in sections at an angle which is more than 45°, preferably more than 60°, preferably more than 75°, with respect to the stand plane.

4. A plastics material container (1) according to at least one of the preceding claims,
**characterized in that**
the container has between 3 and 12 stand feet, preferably between 4 and 8 stand feet, and in a particularly preferred manner between 4 and 7 stand feet.

5. A plastics material container (1) according to at least one of the preceding claims,
**characterized in that**
a ratio between an external diameter of the plastics material container (1) and a diameter of the stand circle is between 0.5 and 0.99, preferably between 0.5 and 0.9, and in a particularly preferred manner between 0.6 and 0.8.

6. A plastics material container (1) according to at least one of the preceding claims,
**characterized in that**
at least one wall portion (64) extends in a straight line at least in sections in at least one pre-set direction.

7. A plastics material container (1) according to claim 6,
**characterized in that**
this wall portion (64) extends in a straight line at least in sections in two pre-set directions at a right angle to each other.

8. A plastics material container (1) according to at least one of the preceding claims,
**characterized in that**
the base portion has, at least in sections, a first dome-like structure extending in the direction of a centre of the base portion (2).

9. A plastics material container (1) according to claim 1,
**characterized in that**
the centre (18) of the base portion (2) is arranged lower in the longitudinal direction of the plastics material container than a further portion (58) of the base portion.

10. A plastics material container (1) according to at least one of the preceding claims,
**characterized in that**
the base portion (1) has an injection point (18) in its centre and at least one groove bottom extends as far as this injection point (18) or is at a distance of less than 5 mm from this injection point.

11. A plastics material container (1) according to at least one of the preceding claims,
**characterized in that**
at least one groove also extends in a circumferential portion (32) of the base portion.

12. A blow mould for producing a plastics material container according to at least one of the preceding claims, wherein the blow mould forms a cavity inside which a plastics material preform is capable of being expanded against an inner wall of the blow mould by being acted upon with a flowable medium,
**characterized in that**
the blow mould has a base element which is suitable for producing a base portion (2) of the container, wherein the base portion (2) has at least three stand feet (4), wherein external surfaces (4a) of these stand feet (4) in each case form a stand portion (20a, 20b, 20c) of the plastics material container extending in sections in the form of an annular segment over a pre-set circumferential angle (a1, a2, a3 ..) and wherein at least three grooves (6) are formed between these stand feet, wherein these grooves (6) extend at least also in a radial direction (R) of the plastics material container which is at a right angle to the longitudinal direction (L), wherein these grooves (6) have in each case a groove bottom (62) which extends at least also in the radial direction as well as a wall portion (64) which extends at least also from this groove bottom (62) to a stand portion (20a, 20b, 20c) of a stand foot adjacent to this groove bottom (62), and wherein a sum of these circumferential angles (a1, a2, a3 ..) is greater than 180°.

## Revendications

1. Récipient en matière plastique pour boisson avec une embouchure (12), par l'intermédiaire de laquelle un liquide peut être prélevé du récipient, avec un corps de base (14) se raccordant dans une direction longitudinale (L) à ladite embouchure (12) et une section de fond (2) se raccordant dans ladite direction longitudinale (L) audit corps de base (14), dans lequel la section de fond (2) présente au moins trois pieds d'appui (4), dans lequel des surfaces extérieures (4a) desdits pieds d'appui (4) réalisent respectivement une section d'appui (20a, 20b, 20c), s'étendant par endroits en forme de segment annulaire sur un angle périphérique (a1, a2, a3..) spécifié, du récipient en matière plastique pour boisson (1) et dans lequel au moins trois rainures (6) sont réalisées entre lesdits pieds d'appui, dans lequel lesdites rainures (6) s'étendent au moins également dans une direction (R) radiale perpendiculaire à la direction longitudinale (L) du récipient en matière plastique pour boisson, dans lequel lesdites rainures (6) présentent respectivement une base de rainure (62) s'étendant au moins également dans la direction radiale ainsi qu'une section de paroi (64), qui s'étend depuis ladite base de rainure (62) au moins également vers une section d'appui (20a, 20b, 20c) d'un pied d'appui adjacent à ladite base de rainure (62),
dans lequel une somme desdits angles périphériques (a1, a2, a3..) est supérieure à 180°,
**caractérisé en ce que**
au moins une rainure (6) présente, en partant de sa base de rainure (62), un angle d'ouverture (b), qui est inférieur à 45°, de manière préférée inférieur à 30°, de manière préférée inférieur à 25°, de manière préférée inférieur à 20°.

2. Récipient en matière plastique pour boisson (1) selon la revendication 1, **caractérisé en ce que**
les sections d'appui (20a, 20b, 20c) en forme de segment annulaire déploient un plan d'appui du récipient, qui est perpendiculaire à la direction longitudinale (L) du récipient.

3. Récipient en matière plastique pour boisson (1) selon la revendication 2, **caractérisé en ce que**
au moins une section partielle de paroi (64) s'étend au moins par endroits par rapport au plan d'appui selon un angle, qui est supérieur à 45°, de manière préférée supérieur à 60°, de manière préférée supérieur à 75°.

4. Récipient en matière plastique pour boisson (1) selon au moins l'une quelconque des revendications précédentes,
**caractérisé en ce que**
le récipient présente entre 3 et 12 pieds d'appui, de manière préférée entre 4 et 8 pieds d'appui et de manière particulièrement préférée entre 4 et 7 pieds d'appui.

5. Récipient en matière plastique pour boisson (1) selon au moins l'une quelconque des revendications précédentes,
**caractérisé en ce que**
un rapport entre un diamètre extérieur du récipient en matière plastique (1) et un diamètre circulaire d'appui se situe entre 0,5 et 0,99, de manière préférée entre 0,5 et 0,9 et de manière particulièrement préférée entre 0,6 et 0,8.

6. Récipient en matière plastique pour boisson (1) selon au moins l'une quelconque des revendications précédentes,
**caractérisé en ce que**
au moins une section de paroi (64) s'étend au moins par endroits de manière rectiligne dans au moins une direction spécifiée.

7. Récipient en matière plastique pour boisson (1) selon la revendication 6, **caractérisé en ce que**
ladite section de paroi (64) s'étend au moins par endroits de manière rectiligne dans deux directions spécifiées perpendiculaires l'une à l'autre.

8. Récipient en matière plastique pour boisson (1) selon au moins l'une quelconque des revendications précédentes,
**caractérisé en ce que**
la section de fond présente au moins par endroits une première structure en forme de dôme s'étendant en direction d'un centre de la section de fond (2).

9. Récipient en matière plastique pour boisson (1) selon la revendication 1, **caractérisé en ce que**
le centre (18) de la section de fond (2) est disposé de manière plus basse dans la direction longitudinale du récipient en matière plastique qu'une autre section (58) de la section de fond.

10. Récipient en matière plastique pour boisson (1) selon au moins l'une quelconque des revendications précédentes,
**caractérisé en ce que**
la section de fond (1) présente en son centre un point d'injection (18) et au moins une base de rainure atteint ledit point d'injection (18) ou est espacée dudit point d'injection à une distance inférieure à 5 mm.

11. Récipient en matière plastique pour boisson (1) selon au moins l'une quelconque des revendications précédentes,
**caractérisé en ce que**
au moins une rainure s'étend également dans une section périphérique (32) de la section de fond.

12. Moule de soufflage, qui est mis au point et prévu pour fabriquer un récipient en plastique de boisson selon au moins l'une quelconque des revendications précédentes, dans lequel le moule de soufflage réalise un espace creux, à l'intérieur duquel une préforme en matière plastique peut être expansée du fait de l'action exercée par un milieu coulant contre une paroi intérieure du moule de soufflage,
**caractérisé en ce que**
le moule de soufflage présente un élément de fond, qui est adapté pour produire une section de fond (2) du récipient, dans lequel la section de fond (2) présente au moins trois pieds d'appui (4), dans lequel des surfaces extérieures (4a) desdits pieds d'appui (4) réalisent respectivement une section d'appui (20a, 20b, 20c) s'étendant par endroits en forme de segment annulaire sur un angle périphérique (a1, a2, a3..) spécifié du récipient en matière plastique pour boisson (1) et dans lequel au moins trois rainures (6) sont réalisées entre lesdits pieds d'appui, dans lequel lesdites rainures (6) s'étendent au moins également dans une direction (R) radiale perpendiculaire à la direction longitudinale (L) du récipient en matière plastique pour boisson, dans lequel lesdites rainures (6) présentent respectivement une base de rainure (62) s'étendant au moins également dans la direction radiale ainsi qu'une section de paroi (64), qui s'étend depuis ladite base de rainure (62) au moins également en direction d'une section d'appui (20a, 20b, 20c) d'un pied d'appui adjacent par rapport à la base de rainure (62) et dans lequel une somme desdits angles périphérique (a1, a2, a3..) est supérieure à 180°.
